# FASCICULE DE BREVET EUROPEEN

(11) **EP 3 917 835 B1**
(45) Date de publication et mention de la délivrance du brevet: **07.06.2023**
(21) Numéro de dépôt: 20707491.5
(22) Date de dépôt: 30.01.2020
(51) Int. Cl.: B64D 31/10, B64D 31/12

(54) **SYSTÈME DE PROPULSION D'AÉRONEF**
FLUGZEUG-ANTRIEBSSYSTEM
AIRCRAFT PROPULSION SYSTEM

(30) Priorité: 01.02.2019 FR 1901009
(43) Date de publication de la demande: 08.12.2021
(73) Titulaire: Safran Electrical & Power, 31702 Blagnac Cedex (FR)
(72) Inventeur: SONNETTE, Pierre-Julien, 31702 Blagnac Cedex (FR); RENOTTE, Alexis, 31702 Blagnac Cedex (FR); LINCK, Benoit, 31702 Blagnac Cedex (FR)
(74) Mandataire: Ernest Gutmann - Yves Plasseraud S.A.S.
(86) Numéro de dépôt international: PCT/FR2020/000022
(87) Numéro de publication internationale: WO 2020/157403

(56) Documents cités:
- EP-A1- 1 783 890
- FR-A1- 2 790 428
- FR-A1- 2 839 215
- FR-A1- 2 937 008
- FR-A1- 3 056 555
- US-A1- 2018 354 632
- US-B2- 10 023 318

## Description

### Domaine technique de l'invention

L'invention concerne un système de propulsion d'aéronef. L'invention se rapporte plus particulièrement à l'architecture d'une chaîne électrique d'un système de propulsion hybride pour un aéronef.

### Etat de la technique antérieure

Les aéronefs à décollage et atterrissage verticaux (souvent désignés par l'acronyme anglais VTOL - Vertical Take-Off and Landing) sont de plus en plus utilisés, notamment dans le transport intra-urbain et inter-urbain des marchandises ou des personnes.

De plus en plus de ces aéronefs fonctionnent avec des systèmes de propulsion hybride, par exemple un système comprenant une turbomachine, un générateur électrique entraîné par la turbomachine, et une batterie. En effet, les systèmes purement électriques fonctionnant seulement à partir d'une batterie ne sont viables que pour le transport d'une charge sur une courte distance comme ceux du marché intra-urbain, l'autonomie des batteries, liée à la faible densité de puissance des batteries par rapport à un turbogénérateur, n'étant pas suffisante pour les autres marchés.

Il est ainsi connu d'utiliser un dispositif de propulsion d'aéronef comportant plusieurs moteurs électriques composé chacun d'un premier demi-moteur et d'un second demi-moteur, comprenant respectivement un premier stator et un second stator coopérant avec un rotor commun dudit moteur, au moins une batterie apte à délivrer une tension continue, et au moins un générateur électrique apte à générer une tension alternative et associé à un redresseur actif apte à transformer ladite tension alternative en une tension continue dont la valeur est pilotée par ledit redresseur actif, la batterie étant reliée à la sortie du redresseur actif.

La batterie est classiquement raccordée directement sur le bus d'alimentation du moteur. Or la tension de la batterie varie en fonction de son niveau de charge, ce qui affecte son mode de fonctionnement en décharge ou recharge et l'alimentation électrique du ou des moteurs concernés.

Par ailleurs, chaque moteur étant divisé en deux demi-moteurs, il est nécessaire de pouvoir contrôler efficacement et simplement les deux demi-moteurs à la même vitesse.

Enfin, en cas de perte ou de défaillance de l'un des demi-moteurs, il est nécessaire de pouvoir détecter une telle défaillance et isoler le demi-moteur concerné afin de pouvoir continuer à contrôler l'autre demi-moteur efficacement.

Les documents FR 3 056 555, FR 2 937 008 et EP 1 783 890 appartiennent à l'art antérieur.

### Présentation de l'invention

L'invention vise à répondre en tout ou partie à ces problèmes techniques. A cet effet, l'invention propose un système de propulsion d'aéronef comportant :
- une turbomachine,
- au moins un moteur électrique comportant un premier demi-moteur et un second demi-moteur, comprenant respectivement un premier stator et un second stator coopérant avec un rotor commun dudit moteur,
- au moins une première source d'énergie apte à délivrer une tension continue,
- au moins un générateur électrique entraîné par la turbomachine et apte à générer une tension alternative de manière à former une seconde source d'énergie, et associé à un redresseur actif apte à transformer ladite tension alternative en une tension continue dont la valeur est pilotée par ledit redresseur actif, la première source d'énergie étant reliée à la sortie du redresseur actif,
caractérisé en ce qu'il comporte
- au moins un module de contrôle apte à alimenter et contrôler la vitesse de chaque demi-moteur, à partir de la tension de la première source d'énergie et/ou de la tension en sortie du redresseur actif,
- au moins un module de surveillance distinct du module de contrôle, le module de surveillance étant apte à supprimer l'alimentation d'au moins un demi-moteur électrique en cas de détection d'une anomalie.

Un demi-moteur partage un rotor commun avec le demi-moteur auquel il est associé, chaque demi-moteur comportant un stator distinct.

L'anomalie peut par exemple être la détection de la perte d'une pale de l'hélice entraînée par le moteur ou une panne ou un dysfonctionnement du module de contrôle.

La fait de réaliser un module de surveillance distinct permet de détecter de façon plus fiable tout type d'anomalie, en particulier une anomalie au niveau du module de contrôle lui-même. Le terme distinct signifie que le module de contrôle et le module de surveillance sont réalisés sur la forme de deux unités physiquement séparées l'une de l'autre de façon à ce qu'une éventuelle défaillance du module de contrôle n'affecte pas le module de surveillance, et inversement.

Le moteur est ainsi associé à une alimentation hybride pouvant utiliser à la fois la première source d'énergie et le générateur électrique. En fonctionnement, la tension du générateur est pilotée pour l'adapter à la tension de la première source d'énergie, par l'intermédiaire du générateur actif. Dans le cas d'une batterie, la tension est ainsi adaptée de façon à ce que la batterie soit en mode de charge, flottante ou de décharge.

L'utilisation d'un redresseur actif permet de piloter le taux de chargement de la première source d'énergie, et donc sa tension, en fonction des besoins. De cette manière, il n'est pas nécessaire de disposer un convertisseur supplémentaire en sortie de la première source d'énergie afin de fournir une tension stable quelle que soit le taux de charge de la première source d'énergie. Ceci permet de réduire la masse de l'ensemble.

La première source d'énergie peut être une batterie, une pile à combustible, un supercondensateur ou tout autre source d'énergie capable de stocker de l'énergie électrique par exemple.

Le module de contrôle et/ou le module de surveillance peuvent être situés entre le redresseur actif et le moteur.

Le système de propulsion peut comporter au moins un premier module de contrôle apte à alimenter au moins un premier demi-moteur et contrôler la vitesse de rotation dudit premier demi-moteur, et au moins un second module de contrôle apte à alimenter au moins un second demi-moteur et contrôler la vitesse de rotation dudit second demi-moteur, et des moyens de synchronisation du premier module de contrôle et du second module de contrôle.

Les moyens de synchronisation permettent de piloter le premier demi-moteur et le second demi-moteur afin que les vitesses de rotation de ces demi-moteurs soient identiques.

Le système de propulsion peut comporter au moins un premier module de contrôle dit maître et un second module de contrôle dit esclave, chaque module de contrôle étant apte à alimenter au moins un premier demi-moteur et un second demi-moteur et contrôler la vitesse de rotation desdits premier et second demi-moteurs, et des moyens de commutation aptes à activer uniquement le premier module de contrôle dans un mode de fonctionnement normal et aptes à activer uniquement le second module de contrôle dans un mode de fonctionnement dégradé. Le module de contrôle et le module de surveillance peuvent comporter des composants électroniques de technologies différentes.

A titre d'exemple, il est possible d'utiliser des processeurs de types différents sur le module de contrôle et sur le module de surveillance, l'un des modules ayant par exemple un ou plusieurs processeurs de type DSP (acronyme anglais de Digital Signal Processor), l'autre ayant par exemple un ou plusieurs processeurs de type MPC (acronyme anglais de MicroProgrammable Controller). Il est également possible d'utiliser un circuit intégré de type FPGA (acronyme anglais de Field Programmable Gate Arrays) pour l'un ou l'autre de ces modules, en remplacement ou en complément des processeurs.

De cette manière, on limite les risques d'apparition d'une panne simultanée sur les modules de contrôle et de surveillance, par exemple en cas de dépassement de la température admissible par les composants concernés.

Le système de propulsion peut comporter au moins un actionneur destiné à modifier le pas des pales d'une hélice couplée en rotation au rotor du moteur électrique.

Le système de propulsion peut comporter des moyens de commutation aptes à connecter ou déconnecter la première source d'énergie et/ou le redresseur actif de la chaîne d'alimentation du moteur.

Le système de propulsion peut comporter au moins deux moteurs, un premier demi-moteur d'un premier moteur et un second demi-moteur d'un second moteur étant alimentés et contrôlé par un même module de contrôle.

Le redresseur actif et/ou les moyens de commutations peuvent être pilotés par le module de contrôle.

L'invention concerne également un aéronef à décollage et atterrissage verticaux comportant au moins un système de propulsion du type précité, une hélice étant couplée en rotation au rotor de chaque moteur.

### Brève description des figures

[Fig. 1] est un diagramme illustrant l'architecture d'une ligne électrique d'alimentation de deux moteurs électriques d'un système de propulsion selon l'invention ;
[Fig. 2] est un diagramme illustrant une forme de réalisation dans laquelle les deux moteurs sont contrôlés par deux modules de contrôle distincts et synchronisés, chaque demi-moteur d'un même moteur étant alimenté par l'un desdits modules de contrôle.

### Description détaillée de l'invention

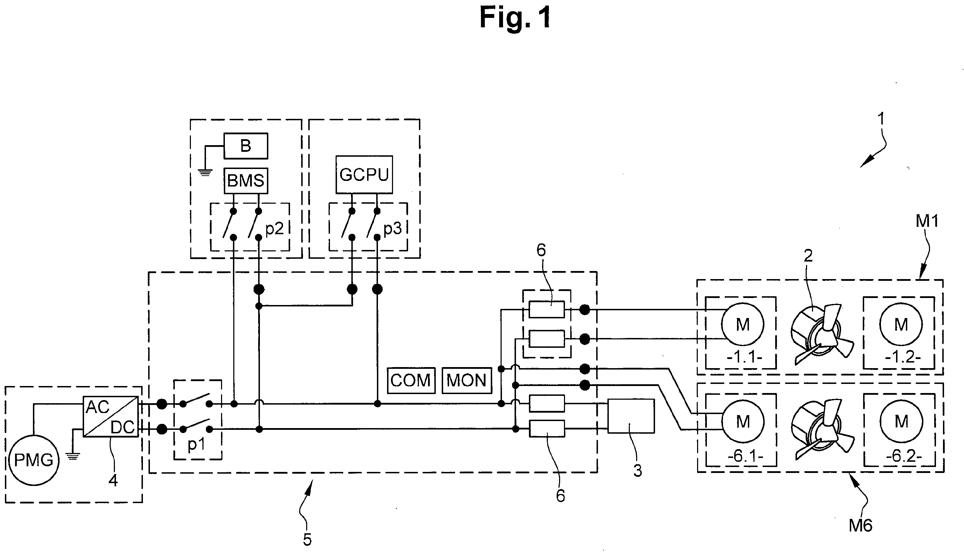

La figure 1 représente une partie d'un ensemble 1 pour un système de propulsion d'un aéronef à décollage et atterrissage verticaux, selon une forme de réalisation de l'invention. Cette figure illustre plus particulièrement l'architecture d'une chaîne ou d'une ligne d'alimentation électrique destinée à alimenter deux moteurs M1 et M6 à partir d'une alimentation hybride.

Chaque moteur M1, M6 comporte deux demi-moteurs M1.1, M1.2 et M6.1, M6.2, comprenant chacun un stator coopérant avec un rotor commun aux deux demi-moteurs M1.1, M1.2, M6.1, M6.2. L'utilisation de deux demi-moteurs offre une redondance électrique et permet de réduire la puissance électrique de chaque demi-moteur, réduisant ainsi les dimensions et la masse des demi-moteurs. En outre, une telle redondance permet d'améliorer la sécurité de fonctionnement de la propulsion en cas de défaillance de l'un des demi-moteurs. Le moteur ou chaque demi-moteur peut être équipé de capteurs aptes à fournir une information quant au couple ou à la vitesse de rotation du rotor.

Le rotor de chaque moteur M1, M6 est couplé à une hélice 2 comportant des pales dont le pas est variable et peut être ajusté à l'aide d'un actionneur 3.

Les sources d'alimentation électriques des moteurs M1, M6 et de l'actionneur 3 sont formées par :
- un générateur électrique à aimant permanent PMG (acronyme anglais de Permanent Magnet Generator), entraîné en rotation par une turbomachine et associé à un redresseur actif 4 apte à transformer la tension alternative issue du générateur électrique PMG en une tension continue dont la valeur est pilotée par ledit redresseur actif 4,
- une batterie B associée à un système de gestion de la batterie BMS (acronyme anglais de Battery Management System), apte à délivrer une tension continue, et
- optionnellement, un groupe de démarrage au sol GCPU (acronyme anglais de Ground Cart Power Unit) apte à délivrer une tension continue, qui peut être raccordé à l'aéronef lorsque celui-ci est au sol.

Des lignes d'alimentation 5 relient la sortie du redresseur actif 4, la batterie B et le système de gestion BMS associé, et éventuellement le groupe de démarrage au sol GCPU, d'une part, aux moteurs M1, M6 et à l'actionneur 3, d'autre part, par l'intermédiaire d'interrupteurs commandés ou contacteurs p1, p2, p3, et de moyens de protection et d'isolation 6 formés par exemple par des fusibles.

Les interrupteurs commandés p1, p2, p3 permettent de couper l'une et/ou l'autre des sources d'alimentation précitées.

L'interrupteur référencé p1 permet d'isoler le générateur PMG et le redresseur actif 4, du reste de la chaîne d'alimentation 5.

L'interrupteur référencé p2 permet d'isoler la batterie B et le système de gestion de la batterie BMS du reste de la chaîne d'alimentation 5.

L'interrupteur référencé p3 permet d'isoler le groupe de démarrage au sol GCPU du reste de la chaîne d'alimentation 5.

Le système de propulsion comporte en outre un module de contrôle COM (COMmand, en anglais) apte à alimenter et contrôler la vitesse de chaque demi-moteur M1.1, M1.2, M6.1, M6.2, à partir de la tension de la batterie B et/ou de la tension en sortie du redresseur actif 4. Le module de contrôle COM permet également de piloter le redresseur actif 4 afin d'ajuster la tension en sortie du redresseur actif 4, et de piloter les interrupteurs commandés p1, p2, p3. La régulation de la tension en sortie du redresseur actif 4 permet de charger ou décharger la batterie B en fonction des besoins, et de contrôler le niveau de charge de ladite batterie B. Le module de contrôle COM permet plus particulièrement de gérer les boucles de régulation de la tension de sortie du redresseur actif, et les boucles de régulation de la vitesse des demi-moteurs.

Le système de propulsion comporte par ailleurs un module de surveillance MON (MONitoring, en anglais), distinct du module de contrôle COM, le module de surveillance MON étant apte à supprimer l'alimentation de chaque demi-moteur électrique M1.1, M1.2, M6.1, M6.2 en cas de détection d'une anomalie.

Le module de contrôle COM et le module de surveillance MON sont dissimilaires en ce qu'ils comportent des composants électroniques, en particulier des coeurs numériques, de technologies différentes.

A titre d'exemple, il est possible d'utiliser des processeurs de types différents sur le module de contrôle COM et sur le module de surveillance MON, l'un des modules ayant par exemple un ou plusieurs processeurs de type DSP (Digital Signal Processor, en anglais), l'autre ayant par exemple un ou plusieurs processeurs de type MPC (MicroProgrammable Controller, en anglais). Il est également possible d'utiliser un circuit intégré de type FPGA pour l'un ou l'autre de ces modules, en remplacement ou en complément des processeurs.

De cette manière, on limite les risques d'apparition d'une panne simultanée sur les modules de contrôle COM et de surveillance MON, par exemple en cas de dépassement de la température admissible par les composants concernés.

Le coeur numérique ou processeur du module de contrôle COM permettant le contrôle des demi-moteurs peut être d'une technologie différente du coeur numérique ou processeur du module de contrôle COM permettant le contrôle du redresseur actif 4.

De même, le coeur numérique ou processeur du module de surveillance MON permettant la surveillance des demi-moteurs peut être d'une technologie différente du coeur numérique ou processeur du module de surveillance MON permettant la surveillance du redresseur actif 4. A titre d'exemple, le contrôle des demi-moteurs peut être réalisé à l'aide d'un processeur de type DSP TM5320, la surveillance des demi-moteurs peut être réalisée à l'aide d'un processeur de type MPC 5566, le contrôle du redresseur actif 4 peut être réalisé à l'aide d'un processeur de type MPC 5566 et la surveillance du redresseur actif 4 peut être réalisé à l'aide d'un processeur de type DSP TM5320.

Seuls deux moteurs M1, M6 sont ici représentés. Bien entendu, le système de propulsion peut comporter plusieurs paires de moteurs, par exemple trois paires de moteurs, une chaîne d'alimentation électrique, un module de contrôle COM et un module de surveillance MON pouvant être associés à chaque paire de moteurs M1, M6. Les moteurs d'une même paire sont de préférence disposés de façon symétrique par rapport à un centre de symétrie de l'aéronef.

Les signaux échangés entre les différents éléments du système de propulsion peuvent être :
- les consignes de vitesse de chaque demi-moteurs M1.1, M1.2, M6.1, M6.2 entre les commandes de vol de l'aéronef et chaque module de contrôle COM,
- les consignes de courant ou les rapports cycliques envoyés des modules de contrôle COM vers les demi-moteurs M1.1, M1.2, M6.1, M6.2,
- les mesures de vitesse et de santé des demi-moteurs M1.1, M1.2, M6.1, M6.2 consolidée dans des modules électronique et envoyées aux commandes de vol,
- les consignes d'hybridation (rapport de puissance entre la batterie B et le générateur PMG), les modes opérationnels, et les données issues de la batterie B à partir d'un superviseur du générateur PMG vers le module de contrôle COM,
- les consignes de tension de sortie de chaque redresseur actif 4 à partir des modules de contrôle COM,
- les surveillances du canal de puissance électrique (statut des contacteurs ou interrupteurs commandés p1, p2, p3, les tensions et les courants, la santés des différents éléments) des modules de contrôle COM et de surveillance MON,
- les commandes des organes de coupure (contacteurs p1, p2, p3 et fusibles 6) depuis les modules de contrôle COM et de surveillance MON.

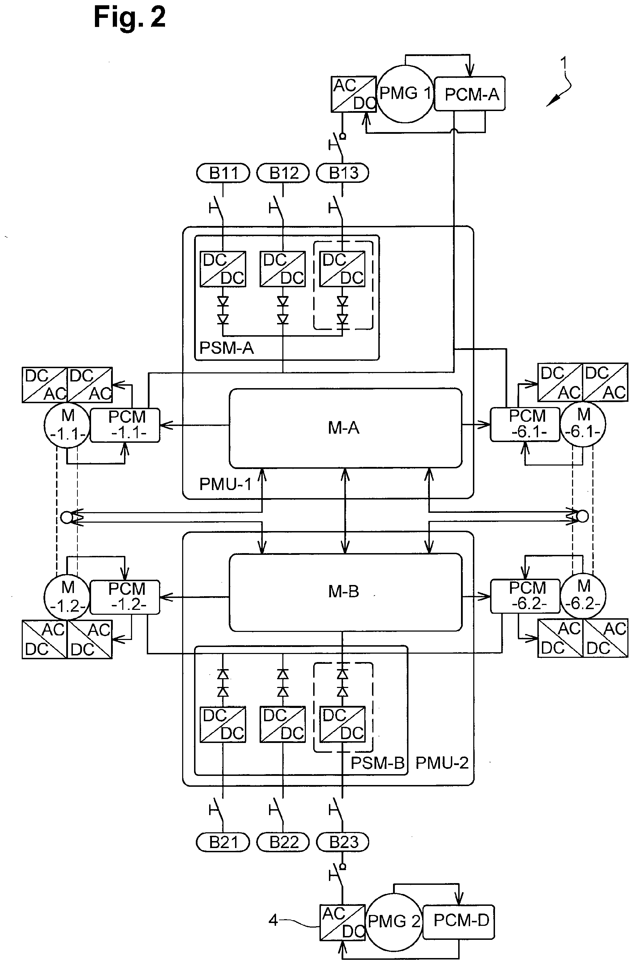

La figure 2 illustre une partie d'un ensemble selon une forme de réalisation de l'invention dans laquelle chaque module de contrôle COM et chaque module de surveillance MON est doublé de façon à réaliser une redondance permettant de garantir un haut niveau de fiabilité et de sécurité. Sur cette figure, le générateur PMG-1, PMG-2 et les demi-moteurs M1.1, M1.2, M6.1, M6.2 sont à chaque fois associés à une unité PMU-1, PMU-2 comportant un module de contrôle COM et un module de surveillance MON au sein d'une carte mère M-A, M-B, le système de propulsion comportant ici également deux génératrices, référencées respectivement PMG-1 et PMG-2.

Chaque unité PMU-1 et PMU-2 comporte en outre des convertisseurs continu-continu regroupé au sein d'un module PSM-A, PSM-B permettant d'adapter le niveau de tension des bus B1.1, B1.2, B 1.3, B2.1, B2.2, B2.3 auxquels ils sont reliés à la tension d'alimentation de la carte mère M-A, M-B.

Dans cette configuration, le module de contrôle COM de l'unité PMU-1 pilote les demi-moteurs M1.1 et M6.1 appartenant aux deux moteurs M1, M6, et synchronise ses consignes avec le module de contrôle COM de l'unité PMU-2. Par ailleurs, le module de contrôle COM de l'unité PMU-2 pilote les demi-moteurs M1.2 et M6.2 appartenant aux deux moteurs M1, M6, et synchronise ses consignes avec le module de contrôle COM de l'unité PMU-1.

## Revendications

1. Système de propulsion d'aéronef comportant
- une turbomachine,
- au moins un moteur électrique (M1, M6) comportant un premier demi-moteur (M1.1, M6.1) et un second demi-moteur (M1.2, M6.2), comprenant respectivement un premier stator et un second stator coopérant avec un rotor commun dudit moteur (M1, M6),
- au moins une première source d'énergie (B) apte à délivrer une tension continue,
- au moins un générateur électrique (PMG) entraîné par la turbomachine et apte à générer une tension alternative de manière à former une seconde source d'énergie, et associé à un redresseur actif (4) apte à transformer ladite tension alternative en une tension continue dont la valeur est pilotée par ledit redresseur actif (4), la première source d'énergie (B) à étant reliée à la sortie du redresseur actif (4),
**caractérisé en ce qu'**il comporte
- au moins un module de contrôle (COM) apte à alimenter et contrôler la vitesse de chaque demi-moteur, à partir de la tension de la première source d'énergie (B) et/ou de la tension en sortie du redresseur actif (4),
- au moins un module de surveillance (MON) distinct du module de contrôle (COM), le module de surveillance (MON) étant apte à supprimer l'alimentation d'au moins un demi-moteur électrique en cas de détection d'une anomalie.

2. Système de propulsion selon la revendication 1, caractérisé en en ce que le module de contrôle (COM) et/ou le module de surveillance (MON) sont situés entre le redresseur actif (4) et le moteur (M1, M6).

3. Système de propulsion selon la revendication 1 ou 2, **caractérisé en ce qu'**il comporte au moins un premier module de contrôle (COM, PMU-1) apte à alimenter au moins un premier demi-moteur (M1.1, M6.1) et contrôler la vitesse de rotation dudit premier demi-moteur (M1.1, M6.1), et au moins un second module de contrôle (COM, PMU-2) apte à alimenter au moins un second demi-moteur (M1.1, M6.1) et contrôler la vitesse de rotation dudit second demi-moteur (M1.2, M6.2), et des moyens de synchronisation du premier module de contrôle (COM, PMU-1) et du second module de contrôle (COM, PMU-2).

4. Système de propulsion selon la revendication 1 ou 2, **caractérisé en ce qu'**il comporte au moins un premier module de contrôle (COM, PMU-1) dit maître et un second module de contrôle (COM, PMU-2) dit esclave, chaque module de contrôle (COM) étant apte à alimenter au moins un premier demi-moteur (M1.1, M6.1) et un second demi-moteur (M1.2, M6.2) et contrôler la vitesse de rotation desdits premier et second demi-moteurs, et des moyens de commutation aptes à activer uniquement le premier module de contrôle (COM, PMU-1) dans un mode de fonctionnement normal et aptes à activer uniquement le second module de contrôle (COM, PMU-2) dans un mode de fonctionnement dégradé.

5. Système de propulsion selon l'une des revendications 1 à 4, **caractérisé en ce que** le module de contrôle (COM) et le module de surveillance (MON) comportent des composants électroniques de technologies différentes.

6. Système de propulsion selon l'une des revendications 1 à 5, **caractérisé en ce qu'**il comporte au moins un actionneur (3) destiné à modifier le pas des pales d'une hélice (2) couplée en rotation au rotor du moteur électrique (M1, M6).

7. Système de propulsion selon l'une des revendications 1 à 3 ou 5 ou 6 lorsqu'elles ne dépendent pas de la revendication 4, **caractérisé en ce qu'**il comporte des moyens de commutation (p1, p2, p3) aptes à connecter ou déconnecter la première source d'énergie (B) et/ou le redresseur actif (4) de la chaîne d'alimentation du moteur (M1, M6).

8. Système de propulsion selon l'une des revendications 1 à 7, **caractérisé en ce qu'**il comporte au moins deux moteurs (M1, M6), un premier demi-moteur (M1.1) d'un premier moteur (M1) et un second demi-moteur (M6.1) d'un second moteur (M6) étant alimentés et contrôlé par un même module de contrôle (COM).

9. Système de propulsion selon l'une des revendications 1 à 8, **caractérisé en ce que** le redresseur actif (4) et/ou les moyens de commutations (p1, p2, p3) sont pilotés par le module de contrôle (COM).

10. Aéronef à décollage et atterrissage verticaux comportant au moins un système de propulsion selon l'une des revendications 1 à 9, une hélice (2) étant couplée en rotation au rotor de chaque moteur (M1, M6).

## Patentansprüche

1. Antriebssystem für Luftfahrzeuge, enthaltend
- ein Turbotriebwerk,
- zumindest einen Elektromotor (M1, M6) mit einer ersten Motorhälfte (M1.1, M6.1) und einer zweiten Motorhälfte (M1.2, M6.2), die jeweils einen ersten Stator bzw. einen zweiten Stator umfassen, die mit einem gemeinsamen Rotor des Motors (M1, M6) zusammenwirken,
- zumindest eine erste Energiequelle (B), die in der Lage ist, eine Gleichspannung zu liefern,
- zumindest einen elektrischen Generator (PMG), der von dem Turbotriebwerk angetrieben wird und eine Wechselspannung erzeugen kann, um eine zweite Energiequelle zu bilden, und dem ein aktiver Gleichrichter (4) zugeordnet ist, der die Wechselspannung in eine Gleichspannung umwandeln kann, deren Wert über den aktiven Gleichrichter (4) gesteuert wird, wobei die erste Energiequelle (B) mit dem Ausgang des aktiven Gleichrichters (4) verbunden ist,
**dadurch gekennzeichnet, dass** es enthält:
- zumindest ein Steuermodul (COM), das dazu geeignet ist, jede Motorhälfte zu versorgen und deren Drehzahl anhand der Spannung der ersten Energiequelle (B) und/oder der Spannung am Ausgang des aktiven Gleichrichters (4) zu steuern,
- zumindest ein vom Steuermodul (COM) separates Überwachungsmodul (MON), wobei das Überwachungsmodul (MON) dazu geeignet ist, die Versorgung zumindest einer Elektromotorhälfte zu unterbrechen, wenn eine Anomalie festgestellt wird.

2. Antriebssystem nach Anspruch 1,
**dadurch gekennzeichnet, dass** das Steuermodul (COM) und/oder das Überwachungsmodul (MON) zwischen dem aktiven Gleichrichter (4) und dem Motor (M1, M6) angeordnet sind.

3. Antriebssystem nach Anspruch 1 oder 2,
**dadurch gekennzeichnet, dass** es zumindest ein erstes Steuermodul (COM, PMU-1) umfasst, das dazu geeignet ist, zumindest eine erste Motorhälfte (M1.1, M6.1) zu versorgen und die Drehzahl der ersten Motorhälfte (M1.1, M6.1) zu steuern, sowie zumindest ein zweites Steuermodul (COM, PMU-2), das dazu geeignet ist, zumindest eine zweite Motorhälfte (M1.1, M6.1) zu versorgen und die Drehzahl der zweiten Motorhälfte (M1.2, M6.2) zu steuern, und Mittel zur Synchronisation des ersten Steuermoduls (COM, PMU-1) und des zweiten Steuermoduls (COM, PMU-2).

4. Antriebssystem nach Anspruch 1 oder 2,
**dadurch gekennzeichnet, dass** es zumindest ein erstes Steuermodul (COM, PMU-1), Master-Modul genannt, und ein zweites Steuermodul (COM, PMU-2), Slave-Modul genannt, umfasst, wobei jedes Steuermodul (COM) dazu geeignet ist, zumindest eine erste Motorhälfte (M1.1, M6.1) und eine zweite Motorhälfte (M1.2, M6.2) zu versorgen und die Drehzahl der ersten und der zweiten Motorhälfte zu steuern, sowie Schaltmittel, die dazu geeignet sind, in einem normalen Betriebsmodus nur das erste Steuermodul (COM, PMU-1) einzuschalten und in einem beeinträchtigten Betriebsmodus nur das zweite Steuermodul (COM, PMU-2) einzuschalten.

5. Antriebssystem nach einem der Ansprüche 1 bis 4,
**dadurch gekennzeichnet, dass** das Steuermodul (COM) und das Überwachungsmodul (MON) elektronische Komponenten mit unterschiedlichen Technologien enthalten.

6. Antriebssystem nach einem der Ansprüche 1 bis 5,
**dadurch gekennzeichnet, dass** es zumindest einen Aktuator (3) umfasst, der dazu bestimmt ist, die Steigung der Blätter eines Propellers (2) zu verändern, der mit dem Rotor des Elektromotors (M1, M6) drehgekoppelt ist.

7. Antriebssystem nach einem der Ansprüche 1 bis 3 oder 5 oder 5 in Abhängigkeit von Anspruch 4,
**dadurch gekennzeichnet, dass** es Schaltmittel (p1, p2, p3) umfasst, die dazu geeignet sind, die erste Energiequelle (B) und/oder den aktiven Gleichrichter (4) mit der Stromversorgungskette des Motors (M1, M6) zu verbinden bzw. davon zu trennen.

8. Antriebssystem nach einem der Ansprüche 1 bis 7,
**dadurch gekennzeichnet, dass** es zumindest zwei Motoren (M1, M6) umfasst, wobei eine erste Motorhälfte (M1.1) eines ersten Motors (M1) und eine zweite Motorhälfte (M6.1) eines zweiten Motors (M6) über ein und dasselbe Steuermodul (COM) versorgt und gesteuert werden.

9. Antriebssystem nach einem der Ansprüche 1 bis 8,
**dadurch gekennzeichnet, dass** der aktive Gleichrichter (4) und/oder die Schaltmittel (p1, p2, p3) über das Steuermodul (COM) angesteuert werden.

10. Senkrecht startendes und landendes Luftfahrzeug mit zumindest einem Antriebssystem nach einem der Ansprüche 1 bis 9, wobei ein Propeller (2) mit dem Rotor jedes Motors (M1, M6) drehgekoppelt ist.

## Claims

1. An aircraft propulsion system comprising
- a turbomachine,
- at least one electric motor (M1, M6) comprising a first half-motor (M1.1, M6.1) and a second half-motor (M1.2, M6.2), comprising respectively a first stator and a second stator cooperating with a common rotor of said motor (M1, M6),
- at least one first energy source (B) capable of delivering a DC voltage,
- at least one electrical generator (PMG) driven by the turbomachine and capable of generating an AC voltage so as to form a second energy source, and associated with an active rectifier (4) capable of transforming said AC voltage into a DC voltage whose value is controlled by said active rectifier (4) the first power source (B) being connected to the output of the active rectifier (4), **characterized in that** it comprises
- at least one COMmand module (COM) capable of supplying and controlling the speed of each half-motor, from the voltage of the first energy source (B) and/or from the output voltage of the active rectifier (4)
- at least one MONitoring module (MON) separate from the COMmand module (COM), the monitoring module (MON) being capable of removing the power supply to at least one electric half-motor if an anomaly is detected.

2. A propulsion system according to claim 1, **characterized in that** the COMmand module and/or the MONitoring module are located between the active rectifier (4) and the motor (M1, M6).

3. A propulsion system according to claim 1 or 2, **characterized in that** it comprises at least one first COMmand module (COM, PMU-1) capable of powering at least one first half-motor (M1.1, M6.1) and controlling the speed of rotation of said first half-motor (M1.1, M6.1), and at least one second COMmand module (COM, PMU-2) adapted to supply at least one second half-motor (M1.1, M6.1) and to control the speed of rotation of said second half-motor (M1.2, M6.2), and means for synchronizing the first COMmand module (COM, PMU-1) and the second COMmand module (COM, PMU-2).

4. A propulsion system according to claim 1 or 2, **characterized in that** it comprises at least a first COMmand module (COM, PMU-1) known as the master and a second COMmand module (COM, PMU-2) known as the slave, each COMmand module (COM) being capable of supplying at least afirst half-motor (M1.1, M6.1) and a second half-motor (M1.2, M6.2) and controlling the speed of rotation of said first and second half-motors, and switching means capable of activating only the first COMmand module (COM, PMU-1) in a normal operating mode and capable of activating only the second COMmand module (COM, PMU-2) in a degraded operating mode.

5. A propulsion system according to one of claims 1 to 4, **characterized in that** the COMmand module (COM) and the monitoring module (MON) comprise electronic components of different technologies.

6. A propulsion system according to one of claims 1 to 5, **characterized in that** it comprises at least one actuator (3) intended to modify the pitch of the blades of a propeller (2) coupled in rotation to the rotor of the electric motor (M1, M6).

7. A propulsion system according to one of claims 1 to 6, **characterized in that** it comprises switching means (p1, p2, p3) capable of connecting or disconnecting the first energy source (B) and/or the active rectifier (4) from the motor supply chain (M1, M6).

8. A propulsion system according to one of claims 1 to 7, **characterized in that** it comprises at least two motors (M1, M6), a first half-motor (M1.1) of a first motor (M1) and a second half-motor (M6.1) of a second motor (M6) being powered and controlled by a single COMmand module (COM).

9. A propulsion system according to one of claims 1 to 8, **characterized in that** the active rectifier (4) and/or the switching means (p1, p2, p3) are controlled by the COMmand module (COM).

10. A vertical take-off and landing aircraft comprising at least one propulsion system according to one of claims 1 to 9, a propeller (2) being coupled in rotation to the rotor of each motor (M1, M6).
